# EUROPEAN PATENT SPECIFICATION

(11) **EP 0 796 819 B1**
(45) Date of publication and mention of the grant of the patent: **15.03.2000**
(21) Application number: 95937202.0
(22) Date of filing: 28.11.1995
(51) Int. Cl.: C01B 31/28

(54) **PROCESS FOR PRODUCING PHOSGENE**
VERFAHREN ZUR HERSTELLUNG VON PHOSGEN
PROCEDE POUR LA PRODUCTION DE PHOSGENE

(30) Priority: 01.12.1994 JP 29868694
(43) Date of publication of application: 24.09.1997
(73) Proprietor: IDEMITSU PETROCHEMICAL CO., LTD., Tokyo 108-0014 (JP)
(72) Inventor: KUNISI, Noriyuki Idemitsu Petrochemical Co., Ltd., Ichihara-shi Chiba-ken 299-01 (JP); MURAI, Norio, Ichihara-shi Chiba-ken 299-01 (JP); KUSAMA, Hiroo Idemitsu Petrochemical Co., Ltd., Chiba-ken 299-01 (JP)
(74) Representative: Türk - Gille - Hrabal - Struck
(86) International application number: JP9502421
(87) International publication number: WO9616898

(56) References cited:
- JP-A- 52 053 768
- JP-A- 52 100 365
- JP-A- 61 161 133
- JP-B- 6 029 129
- JP-B- 45 018 703
- JP-B- 55 014 044
- JP-U- 62 001 736
- JP-U- 63 058 696

## Description

The present invention relates to a process for producing phosgene from carbon monoxide and chlorine by using active carbon as the catalyst. More particularly, the present invention relates to a process for producing highly pure phosgene which enables suppressing formation of impurities accompanied with the rapid exothermal reaction which takes place when active carbon is used as the catalyst for the reaction of carbon monoxide with chlorine.

### BACKGROUND ART

Phosgene is known as an important raw material for chemical synthesis. Particularly because phosgene is an important raw material for polycarbonates, highly pure phosgene is required.

Heretofore, phosgene has generally been produced from carbon monoxide and chlorine by using active carbon as the catalyst. However, this process has various problems, such as formation of byproducts and low efficiency of production, which are described in the following.
(1) It is known that, when commercial active carbon is used without treatment as the catalyst for the reaction of carbon monoxide with chlorine, a large amount of impurities, particularly carbon tetrachloride, is formed in the obtained reaction gas as byproducts because of impurities in the active carbon (Japanese Patent Publication Heisei 6(1994)-29129) or because of increase in the reaction temperature generally caused by the rapid reaction (Japanese Patent Publication Showa 55(1980)-14044). The obtained product is not satisfactory as a raw material for chemical synthesis in the field where highly pure phosgen is required.
(2) It is generally understood that metal impurities contained in commercial active carbon accelerate the formation of byproducts, such as carbon tetrachloride, in the reaction of carbon monoxide with chlorine. Decreasing the content of such metal impurities to a specific value or lower by washing the catalyst with an acid is considered to be effective for solving the problem (Japanese Patent Publication Heisei 6(1994)-29129). However, when the amount of production is large, treating a large amount of the catalyst in such a manner is troublesome. Therefore, using this treatment in the actual production is difficult, and moreover, efficient removal of the impurities is also difficult. Thus, this treatment is not satisfactory, either.
(3) In order to prevent the increase in the reaction temperature, a process in which the raw materials for the reaction and gases are passed through the surface layer of the catalyst alone and a process in which cooling tubes are arranged in multi-stages have been proposed. However, these processes have that drawback in that the volume efficiency of the reactor is extremely decreased. In the latter process, it is inevitable that the structure of the reactor becomes complicated.
(4) A process in which the catalytic layer is cooled from the outside is also described (Kirk-Othmer, "Encyclopedia of Chemical Technology", Second Edition, Volume 5). However, it is known that the central part of the catalyst is heated to a high temperature in this process, and a large amount of carbon tetrachloride is formed.

When phosgene contains impurities such as carbon tetrachloride, the impurities are considered to affect the quality of formed polymers in chemical reactions, particularly in the production of polycarbonates by the interfacial polycondensation. Thus, development of a process for producing highly pure phosgene has been desired.

Accordingly, the present invention has the object of providing a process for producing phosgene which enables producing highly pure phosgene suited for chemical reactions, particularly for producing polycarbonates by the interfacial polycondensation, does not require a process for pretreatment of active carbon, a reactor equipped with a specific cooling tube, or a specific mode of flow of the reacting gases, and can efficiently produce phosgene.

### DISCLOSURE OF THE INVENTION

As the result of extensive studies conducted by the present inventors to solve the above problems, it was discovered that highly pure phosgene can effectively be produced by adding and dispersing an inert material into the catalytic layer containing active carbon to dilute the active carbon in the catalytic layer, and that highly pure phosgene can be produced more efficiently by using a specific inert material in a specific form. The present invention has been completed on the basis of the discoveries.

Accordingly, the present invention provides:
(1) A process in the manner of claim 1 for producing phosgene comprising reacting carbon monoxide with chlorine by passing them both through a catalytic layer which comprises active carbon as a main component and is diluted with a material substantially inert to carbon monoxide and chlorine;
(2) A process for producing phosgene described in (1) wherein the material substantially inert to carbon monoxide and chlorine is a ceramic material and/or a metal material;
(3) A process for producing phosgene described in (2) wherein the ceramic material and/or the metal material is a material formed to a shape of hollow spheres or tubes;
(4) A process for producing phosgene described in (1) wherein the catalytic layer contains 5 to 80 % by volume of the material substantially inert to carbon monoxide and chlorine;
(5) A process for producing phosgene described in (1) wherein carbon monoxide is reacted with chlorine by using a tubular reactor of a multi-tube type; and
(6) A process for producing phosgene according to Claim 5 wherein the catalytic layer which is diluted with a material substantially inert to carbon monoxide and chlorine is used in an introducing part of the tubular reactor.

### BRIEF DESCRIPTION OF THE DRAWINGS

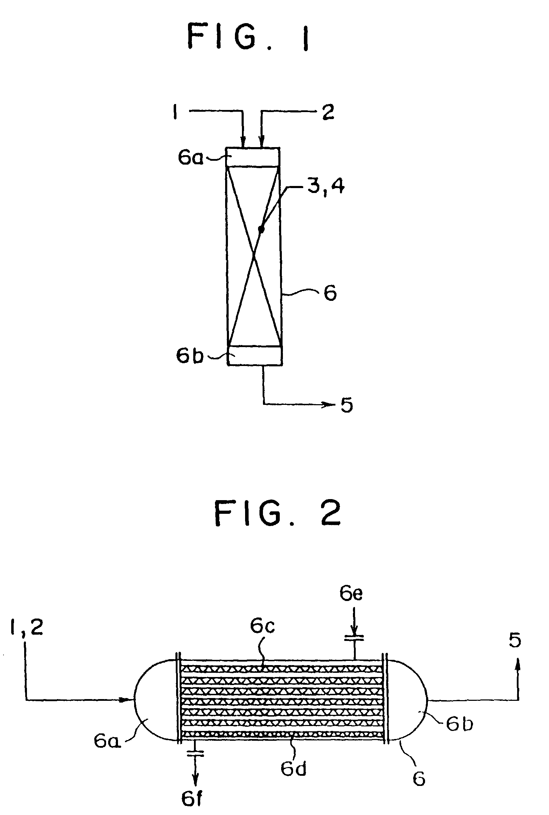

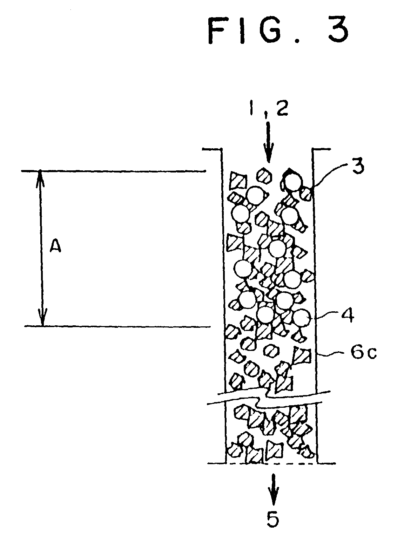

Figure 1 shows a schematic diagram exhibiting the process for producing phosgene of the present invention. Figure 2 shows a longitudinal sectional view of a reactor of a multi-tube type for producing phosgene. Figure 3 shows a partially sectional view of a reaction tube in the reactor. In the figures, the numbers and the character have the meanings as listed in the following:
- 1:: CO used as a raw material gas
- 2:: Cl₂ used as a raw material gas
- 3:: a catalyst
- 4:: a diluent
- 5:: phosgene
- 6:: a reactor for producing phosgene
- 6a:: an inlet of the reactor for producing phosgene
- 6b:: an outlet of the reactor for producing phosgene
- 6c:: a reaction tube
- 6d:: a jacket for passing cooling water
- 6e:: an inlet for cooling water
- 6f:: an outlet for cooling water
- A:: a diluted part of the catalyst

### THE MOST PREFERRED EMBODIMENT TO CARRY OUT THE INVENTION

Figure 1 shows a schematic diagram exhibiting the process for producing phosgene of the present invention. The raw material gases CO (1) and Cl₂ (2) are introduced through an inlet (6a) into a reactor (6) which is packed with a packing material prepared by mixing active carbon (3) used as the catalyst and ceramic balls or diluting materials of stainless steel as the diluent (4). The reaction product COCl₂ is discharged through an outlet (6b) of the reactor (6).

Carbon monoxide and chlorine used as the raw materials for producing phosgene in the present invention are each required to have a high purity.

When carbon monoxide contains hydrogen, hydrogen reacts with chlorine, another raw material for producing phosgene, to form hydrochloric acid. When carbon monoxide contains water, there is the possibility that the produced phosgene is hydrolyzed by the reaction with water to form carbon dioxide gas and hydrochloric acid. When chlorine contains hydrocarbons as impurities, hydrochloric acid and corresponding chlorinated hydrocarbons tend to be formed. Because these compounds are very active with respect to the adsorption to the active carbon used as the catalyst in the present invention, these compounds work as catalyst poisons. Therefore, the presence of these compounds is not preferable. When sulfides are present in chlorine used as the raw material, sulfur chloride is formed. Therefore, it is necessary that sulfides be removed in advance as much as possible. When oxygen is present, the reaction of producing phosgene is adversely affected, and the presence of oxygen is not preferable, either.

As the process for producing carbon monoxide which is used as one of the raw materials in the present invention, various processes have been known. A synthetic gas, a gas from a carbide furnace, a gas from a blast furnace, or a gas from a steel making furnace can be used. These gases are generally supplied for the reaction after purification by passing through an adsorption tower or by cryogenic separation because a high purity gas is required as described above.

As the process for producing chlorine which is used as another raw material, chlorine formed by the electrolysis (such as the diaphragm process and the ion exchange membrane process) of an aqueous solution of sodium chloride can be purified and used.

Active carbon used as the catalyst in the present invention is not limited to a specific type. Typical examples of active carbon are listed in the following with respect to specific features.
(1) With respect to the form: active carbons of a powder form and active carbons of granules (pellets and tablets).
(2) With respect to the material used for preparation: active carbons prepared from wood, saw dust, coconut husk, lignin, lignite, brown coal, peat, and coal.
(3) With respect to the treatment for preparation: active carbons prepared by a pretreatment, such as the steam activation and the chemical activation.

The diluent for the catalytic layer of the present invention is used for decreasing the concentration of the catalyst component in the catalytic layer to prevent concentration of heat generated by the reaction.

When the diluent has a positive or negative catalytic activity to the reaction of carbon monoxide and chlorine, the object of the present invention cannot be achieved, either. When impurities are contained in the diluent used in the present invention, the impurities are also required to be inert.

Examples of the diluent used in the present invention for the catalytic layer containing active carbon are listed in the following with respect to specific features.
(1) With respect to the material used for preparation: ceramics and metals which are substantially inert to the raw material gases. Examples of such ceramics and metals include:
(2) Ceramics: ceramics prepared from alumina, zirconia, magnesium oxide, chromium oxide, silicon carbide, and zinc sulfide; and
(3) Metals: noble metals as elements and alloys such as stainless steel, hastelloy, and inconel; metals are generally preferable for decreasing temperature because of higher thermal conductivities.
(4) With respect to the shape: easily available spherical shapes which can easily be mixed with active carbon;
   Hollow spheres having a density close to that of the active carbon so that separation or uneven distribution is not caused during mixing with the catalyst and packing into the reactor; and
   Rings or tubes having a structure not causing separation or uneven distribution during mixing with the catalyst and packing into the reactor and used in packed columns for increasing the contact between a fluid and the packed material. Examples include Raschig rings, Lessing rings, TERALLET, and Pallrings.
(5) With respect to the size: a diameter and a length both of about 0.1 to10 mm.
   When the size is smaller than 0.1 mm or larger than 10 mm, uniform and stable dispersion in active carbon becomes difficult. Therefore, formation of hot spots and uneven flow of fluids in the catalytic layer tend to be caused.

The condition of the reaction of carbon monoxide with chlorine using the active carbon as the catalyst in accordance with the process of the present invention is described in the following.

The reaction of carbon monoxide with chlorine is generally known to proceed in accordance with the equation:

CO + Cl₂ = COCl₂

The temperature and the pressure can be selected in accordance with conventional processes.

It is generally preferable that carbon monoxide is used in an amount by mole which is the same as or slightly more than that of chlorine.

It is most preferable that the whole catalytic layer (active carbon) is diluted in accordance with the process of the present invention. When an exothermic reaction is carried out in a tubular reactor as is the case in the production of phosgene by the reaction of carbon monoxide with chlorine, it is known that a rapid increase in the temperature takes place in the first half of the reactor (for example, "Guide to the design of chemical plants", edited by Kagaku Kogakukai (Japanese Association of Chemical Engineering), (1991)). Therefore, at least the catalytic layer in the first half of the reactor or in the part of the reactor for introducing the raw material gases must be diluted. The undesirable increase in the reaction temperature can be prevented by this dilution.

As for the degree of dilution of the catalytic layer of the present invention, the content of the diluent is preferably 5 to 90 % by volume, more preferably 5 to 80 % by volume, of the catalyst layer. When the content is less than 5 % by volume, the effect of decreasing the reaction temperature by dilution is not obtained. When the content is more than 90 % by volume, uniform dilution is difficult. When the content is in the more preferred range, the above effects are enhanced.

As the type of the reactor applied to the process of the present invention, a tubular reactor of a multi-tube type is preferable.

Figure 2 shows a longitudinal sectional view of a tubular reactor of a horizontal multi-tube type. The reactor for producing phosgene (6) is equipped with a number of reaction tubes (6c) at the central part in the longitudinal direction and open to the sides of an inlet (6a) and an outlet (6b) of the reactor for producing phosgen. The space between the reaction tubes is used as a jacket (6d) through which cooling water is passed. The cooling water introduced from an inlet for cooling water (Ge) is passed through this jacket and discharged from an outlet for cooling water (6f). The cooling water is used for the purpose of removing heat generated in individual reaction tubes as much as possible and as quickly as possible and makes the reaction of carbon monoxide with chlorine to proceed as efficiently as possible.

Each reaction tube (6c) is packed with a mixture of a catalyst (3) comprising active carbon as the main component and a diluent (4). The raw material gases of CO (1) and Cl₂ (2) are introduced through the inlet (6a) of the reactor for producing phosgene, passed through the reaction tubes, and allowed to react with each other in the reaction tubes. The produced phosgene (5) is discharged from the outlet (6b) of the reactor for producing phosgene.

Figure 2 shows an embodiment in which the raw materials CO (1) and Cl₂ (2) are mixed together in advance and then supplied to the reactor. However, what is required is just that the raw materials CO (1) and Cl₂ (2) be supplied to the reactor in a prescribed relative amounts in mole. The raw materials may be supplied separately or as a mixture prepared in advance. The mode of introduction of the raw materials into the reactor for producing phosgene is not particularly limited. The effect of the present invention does not depend on the mode of the introduction of the raw materials.

The inner diameter of the above reaction tube is not particularly limited. The inner diameter is preferably about 3 to 200 mm for achieving uniform packing of the catalyst and the diluent.

The length of the above reaction tube is varied depending on the inner diameter of the reaction tube, the flow rates of the raw materials, and the efficiency of cooling and cannot be specified.

The number of the reaction tube is varied depending on the amount of phosgene to be produced and cannot be specified.

As the reaction tube, a reaction tube of a vertical type is preferable to that of a horizontal type in view of the easiness of the packing operation of the catalyst and the like into the tube.

For the material of the reactor for producing phosgene, particularly for the material of the inner wall of the reaction tube, the resistance to CO (1) and the resistance to Cl₂ (2) are both required, and glass or stainless steel is preferably used as the material.

Figure 3 shows a partially sectional view of the reaction tube in a reactor of a vertical type. The condition of distribution of the catalyst (3) and the diluent (4) packed into the reactor is schematically shown. The raw materials (1) and (2) are supplied from the inlet at the upper part. The dilution of the catalyst is made mainly at the introducing part of the reactor where the temperature is considered to become high. (The area A in Figure 3 shows the diluted area and can be referred to as a diluted part of the catalyst.)

A single diluted part of the catalyst exhibits a sufficient effect. However, two or more diluted parts may be formed when the design of the size of the reactor requires them.

The present invention is described in more detail with reference to examples in the following. However, the present invention is not limited by the examples.

### Example 1

The reactor for producing phosgene (6) shown in Figure 2 was used in a vertical mode. A reaction tube made of stainless steel and leaving a length of 4 m and an inner diameter of 15 mm was packed with a commercial granular active carbon (active carbon made from husk of coconut and pulverized to a diameter of 1.2 to 2.4 mm), The reaction tube was packed with the active carbon in the following manner: a part of the reaction tube of the length of 1 m from the end for introducing the raw material gases was left unpacked; the remaining part of the length of 3 m was packed with the above active carbon; and then the part of the reaction tube of the length of 1 m which had been left unpacked was packed with a material prepared by mixing the same amounts by volume of ceramic balls made of zirconia (a diameter of 2 mm) and the above active carbon.

Carbon monoxide and chlorine were introduced into the reaction tube from the end containing the diluted catalyst in flow rates of 5.05 mol/hr and 4.80 mol/hr, respectively, and phosgene was produced at a rate of about 500 g/hr.

Ten thermocouples were attached to the reaction tube at positions which are arranged at every 5 cm along the reaction tube starting from the inlet of the raw material gases so that the maximum temperature of the reactor could be measured. The reactor has a double tube structure to form a jacket. Hot water of about 75°C was passed through the jacket, and the heat generated by the reaction was removed.

The results of the reaction were evaluated from the maximum temperature, the distance of the position of the maximum temperature from the inlet of the raw materials gases, the conversion of the reaction obtained by the analysis of the gas after the reaction by the gas chromatography, and the content of impurities in the obtained phosgene.

The condition of packing of the catalytic layer and the results of the reaction are shown in Table 1 and Table 2, respectively.

### Examples 2 to 6

Phosgene was produced under the same condition as that in Example 1 except that the type of active carbon in the catalytic layer and the length of packing of the catalytic layer were changed.

The condition of packing of the catalytic layer and the results of the reaction are shown in Table 1 and Table 2, respectively.

### Comparative Example 1

Phosgene was produced under the same condition as that in Example 1 except that the reaction tube was packed with active carbon of the catalyst without dilution.

The condition of packing of the catalytic layer and the results of the reaction are shown in Table 1 and Table 2, respectively.

**Table 1**

| | catalytic layer | | |
|---|---|---|---|
| | diluent | diluted length (m)^{*1} | degree of dilution (% by vol.)^{*2} |
| Example 1 | zirconia (spherical, 2 ø) | 1 | 50 |
| Example 2 | zirconia (spherical, 2 ø) | 1 | 30 |
| Example 3 | SUS (spherical, 1.5 ø) | 1 | 30 |
| Example 4 | SUS (Raschig ring, 1/8") | 1 | 50 |
| Example 5 | alumina (spherical, 2ø) | 0.5 | 50 |
| Example 6 | alumina (spherical, 2 ø) | 0.5 | 80 |
| Comparative Example 1 | - | - | - |

| | | | |
|---|---|---|---|
| *1: the distance from the inlet of the raw material gases | | | |
| *2: the content of a diluent used for dilution in % by volume | | | |

**Table 2**

| | reaction temperature | | conversion of reaction (%) | impurities in phosgene | |
|---|---|---|---|---|---|
| | maximum temperature (°C) | position of measurement (cm)^{*3} | | CHCl₃ (ppm by wt.) | CCl₄ (ppm by wt.) |
| Example 1 | 250 | 25 | 100 | 35 | 110 |
| Example 2 | 260 | 25 | 100 | 40 | 90 |
| Example 3 | 230 | 25 | 100 | 60 | 130 |
| Example 4 | 235 | 20 | 100 | 45 | 100 |
| Example 5 | 245 | 25 | 100 | 50 | 100 |
| Example 6 | 275 | 25 | 100 | 80 | 180 |
| Comparative Example 1 | 460 | 15 | 100 | 250 | 420 |

| | | | | | |
|---|---|---|---|---|---|
| *3: the distance from the inlet of the raw material gases | | | | | |

### INDUSTRIAL APPLICABILITY

As described above, in accordance with the process of the present invention, the reaction temperature is significantly decreased and the content of impurities in the produced phosgene can be decreased to an extremely small value by diluting the catalytic layer containing active carbon as the main component, particularly the catalytic layer at the introducing part of the raw material gases, with a diluent. The process is highly valuable for industrial application.

## Claims

1. A process for producing phosgene comprising reacting carbon monoxide with chlorine by passing them both through a catalytic layer which comprises active carbon as a main component and is diluted with a material substantially inert to carbon monoxide and chlorine, comprising a ceramic material and/or a metal material, the material being formed to a shape of hollow spheres, tubes or rings having a size of a diameter and length of both from about 0,1 to 10 mm and the catalytic layer containing 5 to 80 % by volume of the inert material.

2. A process for producing phosgene according to Claim 1 wherein carbon monoxide is reacted with chlorine by using a tubular reactor of a multi-tube type.

3. A process for producing phosgene according to Claim 2 wherein the catalytic layer which is diluted with a material substantially inert to carbon monoxide and chlorine is used in an introducing part of the tubular reactor.

## Patentansprüche

1. Verfahren zur Herstellung von Phosgen, das umfaßt: Umsetzen von Kohlenmonoxid mit Chlor durch Leiten der beiden durch eine Katalysatorschicht, die Aktivkohle als Hauptkomponente umfaßt und die mit einem gegenüber Kohlenmonoxid und Chlor im wesentlichen inerten Material verdünnt ist, das ein keramisches Material und/oder Metall-Material umfaßt, wobei das Material die Form hohler Kugeln, Röhren oder Ringe, deren Größe im Durchmessers und in der Länge jeweils bei ungefähr 0,1 bis 10 mm liegt, einnimmt und worin die katalytische Schicht 5 bis 80 Volumenprozent des inerten Materials enthält.

2. Verfahren zur Herstellung von Phosgen nach Anspruch 1, worin das Kohlenmonoxid mit dem Chlor unter Verwendung eines Röhrenreaktors vom Mehrröhrentyp umgesetzt wird.

3. Verfahren zur Herstellung von Phosgen nach Anspruch 2, worin die Katalysatorschicht, die mit dem im wesentlichen gegenüber Kohlenmonoxid und Chlor inerten Material verdünnt ist, im Eingangsbereich des Röhrenreaktors verwendet wird.

## Revendications

1. Procédé pour préparer du phosgène, comprenant la mise en réaction de monoxyde de carbone avec du chlore en faisant passer les deux à travers une couche catalytique qui comprend du charbon actif à titre de composant principal et qui est diluée avec une matière essentiellement inerte vis-à-vis du monoxyde de carbone et vis-à-vis du chlore, comprenant une matière céramique et/ou une matière métallique, la matière étant façonnée pour obtenir des sphères creuses, des tubes ou des anneaux dont le diamètre et la longueur s'élèvent tous deux d'environ 0,1 à 10 mm, et la couche catalytique contenant la matière inerte à concurrence de 5 à 80% en volume.

2. Procédé pour préparer du phosgène selon la revendication 1, dans lequel on fait réagir du monoxyde de carbone avec du chlore en utilisant un réacteur tubulaire du type à tubes multiples.

3. Procédé pour préparer du phosgène selon la revendication 2, dans lequel la couche catalytique qui est diluée avec une matière essentiellement inerte vis-à-vis du monoxyde de carbone et vis-à-vis du chlore est utilisée dans une partie d'introduction du réacteur tubulaire.
